# EUROPEAN PATENT SPECIFICATION

(11) **EP 1 137 337 B1**
(45) Date of publication and mention of the grant of the patent: **09.07.2003**
(21) Application number: 99962296.2
(22) Date of filing: 10.12.1999
(51) Int. Cl.: A01K 91/047, A01K 97/00

(54) **FISHING AID**
HILFSMITTEL ZUM FISCHEN
ACCESSOIRE DE PECHE

(30) Priority: 10.12.1998 GB 9827044
(43) Date of publication of application: 04.10.2001
(73) Proprietor: Adams, Michael, Seafield, Aberdeen AB15 7YZ (GB); Souter, Alexander Robson, Aberdeen AB15 6YZ (GB); Steele, Agnes Ann, Ellon, Aberdeenshire AB41 9QH (GB)
(72) Inventor: SOUTER, Alexander, Robson, Aberdeen AB15 6YZ (GB)
(74) Representative: Allan, James Stewart
(86) International application number: GB9904211
(87) International publication number: WO00033652

(56) References cited:
- US-A- 2 502 751
- US-A- 2 518 687
- US-A- 3 731 960
- US-A- 4 871 200
- US-A- 5 815 979

## Description

The present invention relates to a fishing aid, and more particularly to a fishing aid which assists in making a rig or other fishing tackle.

Rigs are commonly used in most types of fishing and generally consist of one or more hooks attached to a fishing line using a swivel (or similar component). The swivel is held in place using a crimp (or similar device) and a bead on each side of the swivel.

Conventionally, rigs are made by hand, typically by extending lengths of fishing line from a spool, slipping the various components onto the line and keeping the components in place on the line by the use of crimps (or similar devices), or by tying the line in appropriate places.

This conventional method is very time consuming and is often difficult to assemble as one hand is required to keep tension in the fishing line whilst the other hand feeds the components onto the line and assembles them.

Furthermore, if the rig is to be constructed using fishing lines with different breaking strengths, the conventional method of construction described above is made even more difficult.

US-A-2518687 discloses a machine for forming leaders according to the preamble of claim 1.

According to the present invention, there is provided a fishing aid comprising a body, at least one spool holder coupled to the body, and a retainer coupled to the body to receive a line, characterised in that the length of the body is adjustable.

The body is typically substantially U-shaped. Typically, the body comprises a first portion and a second portion, the first and second portions being telescopically coupled so that the length of the body may be adjusted.

The fishing aid may optionally be provided with indicia, typically to indicate the length of component parts of a fishing rig or trace, or to indicate the length of line which has been extended (eg the length of a fishing rig, snood or the like), or to indicate the length to which the body has been adjusted.

The spool holder is typically located on one of the arms of the U-shaped body. Optionally, a spool holder may be positioned on each arm of the U-shaped body. The spool holder typically includes a rod. The rod is typically removably coupled to the body.

The retainer typically comprises a spring means such as a coil spring, compression spring, leaf spring etc, and in a preferred embodiment comprises at least one retaining spring. The retaining spring is typically positioned perpendicular to the body. The retaining spring can typically receive at least a portion of a fishing line between adjacent coils of the spring.

The retaining spring is typically supported by a holder, the holder being optionally movably attached to the body.

The holder is typically substantially U-shaped, the retaining spring being mounted between the arms of the U-shape. The holder is typically attached to the body substantially perpendicularly thereto. The holder is optionally provided with resilient stabilisers to enhance the stability of the aid.

The fishing aid may includes a tension spring coupled to the or each arm of the U-shaped body.

The fishing aid may also include a stopper, the stopper being provided on at least one of the arms of the body. The stopper is typically provided with a groove in which a fishing line may be positioned.

The fishing aid optionally includes at least one hook positioned on the body. Two hooks are typically provided on the body, the or each hook typically being attached to the arms of the U-shaped body.

The body is typically provided with at least one resilient stabiliser, the resilient stabiliser typically comprising a rubber foot.

The line is typically a fishing line.

Embodiments of the present invention shall now be described, by way of example only, with reference to the accompanying drawings in which:-
Fig. 1 is an exploded view of an example of a fishing aid in accordance with the present invention; and
Fig. 2 is an assembled view of the fishing aid of Fig. 1.

Referring to the drawings there is shown a fishing aid, generally designated 10, which aids in the manufacture of fishing rigs or traces 11. The aid 10 includes a substantially U-shaped body 12, the body 12 comprising a first portion 12a and a second portion 12b. The first and second portions 12a, 12b are substantially L-shaped, the smaller sides of the L-shape forming two spaced apart arms 14a, 14b.

The first and second portions 12a, 12b are telescopically coupled so that the distance between the arms 14a, 14b may be adjusted. This allows different lengths of rigs 11 to be made. The longer side of the L-shapes may include indicia (such as an adhesive tape measure 16) the indicia being used to measure the lengths of the component parts of the rig 11 or snoods 64. The indicia may optionally be used to indicate the distance between the arms 14a, 14b. The indicia allows a user to more accurately measure the length of the component parts of the rig 11 or snood 64 and/or set the distance between the arms 14a, 14b to correspond to the length of rig 11 which is required.

The position of the first and second portions 12a, 12b may be fixed relative to one another using a tension screw 18. The tension screw 18 is threadedly engaged in an aperture 18a in the first portion 12a, one end of the screw 18 abutting against the second portion 12b to restrict movement of the portions 12a, 12b relative to one another.

A spring holder 20 is coupled (optionally movably coupled) to the body 12. The spring holder 20 includes a cross-bar 22 which is attached to the body 20 using a retaining screw 24, or the like. At either end of the cross-bar 22 is an arm 26. Mounted between the arms 26 is a retaining spring 28 which is used to receive at least a portion of a fishing line 30 when the aid 10 is being stored, or when it is in use (ie to hold at least a portion of the rig 11 in a convenient location or to receive loose ends of the fishing line 30 during use of the aid 10). A rubber foot 31 may be provided on each end of the cross-bar 22 to enhance stability of the aid 10. One or more additional rubber feet 31 may also be provided on the body 12 to further enhance the stability of the aid 10. The spring holder 20 may be positioned at any convenient location on body 12 and secured in place using retaining screw 24.

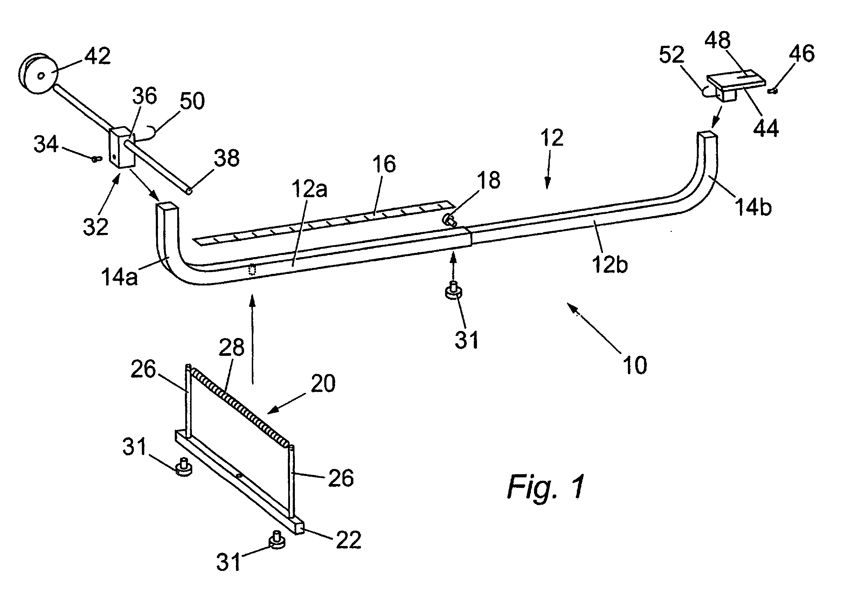

Removably mounted on arm 14a is a spool holder 32 which is attached using a retaining screw 34 or the like. The holder 32 includes a base 36 which has an aperture (not shown) at the lower end thereof for receiving an upper end of arm 14a. A rod 38 is inserted through the base 36, and the holder 32 is positioned so that the rod 38 is substantially perpendicular to the body 12. A spool 40 (or a plurality thereof) which holds the fishing line 30 is positioned on the rod 38 and held in place on rod 38 using one or more rubber spool stops 42 (Fig. 1). Generally, a number of spools 40 containing fishing line of different breaking strengths are provided on the rod 38.

A line hook 50 is located on the base 36 of the spool holder 32. Additionally, or alternatively, a tension spring (not shown) may be attached to the spool holder 32 (eg having the tension spring coupled to line hook 50, or provided directly on the base 36 of the spool holder 32) to provide tension to the fishing line 30 during assembly of the rig 11.

A rubber line holder 44 is removably attached to arm 14b using a retaining screw 46 or the like. The rubber line holder 44 has a groove 48 therein, groove 48 being capable of receiving a fishing line, as will be described. A second line hook 52 is positioned on the rubber line holder 44.

A retaining device (eg a loop of metal or the like) can be removably attached to the rubber line holder, or directly to the arm 14b, the retaining device being used to hold an impact lead during assembly of the rig 11, so that the rig 11 can be directly attached to the impact lead.

It should be noted that the spool holder 32 may be mounted to arm 14b. Optionally, a further spool holder 32 may be coupled to the arm 14b in place of the rubber line holder 44 to allow a greater number of spools 40 to be mounted to the aid 10. A plurality of spools 40 having fishing lines 30 of different breaking strengths may be mounted on the or each spool holder 32.

In use, the fishing line 30 is despooled to the required length (which may be measured using the adhesive measuring tape 16). As the rig 11 is generally made with the fishing line 30 under tension, the line 30 (ie the first end of rig 11) can be attached to a tension spring (not shown) which is coupled to the arm 14b. The tension spring may be attached directly to a portion of the arm 14b, or it can be attached to a portion of the rubber line holder 44. The tension spring may also be attached to hook 52 on the rubber line holder 44. The line 30 is typically attached to the tension spring using a split link (not shown).

It should be noted that the end of the rig 11 may be attached directly (eg it may be tied or otherwise affixed (for example using a split link)) to the hook 52 without use of a tensioning spring. However, if a tension spring is not used, the rig 11 will generally require to be tensioned by adjusting the distance between the arms 14a, 14b using the tension screw 18 and telescopic movement of the portions 12a, 12b.

Alternatively, the end of the fishing line 30 may be extended from the spool 40 and positioned in the groove 48 on the rubber line holder 44. This provides a further anchor point for the line 30 during assembly of the rig 11.

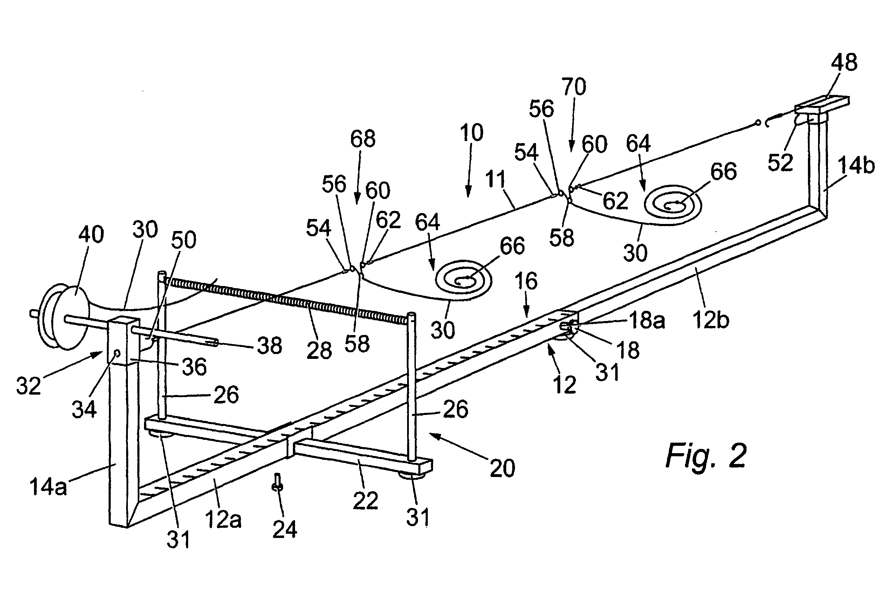

Once the first end of the rig 11 has been anchored (eg by being fixed to either the tension spring or line hook 52, or positioned in groove 48), the various components are thereafter added to the line 30. In the example shown in Fig. 2, a first crimp 54, a first bead 56, a swivel 58, a second bead 60 and a second crimp 62 are threaded onto the fishing line 30 at a first location 68. This is then repeated at a second location 70 spaced apart from the first location 68.
It should be noted that a plurality of swivels 58 or the like may be provided at various locations along the length of the rig 11 as required.

Once the components have been added and the line 30 has been measured to the required length, it is then cut at or near spool 40. The loose end of the line 30 from the spool 40 may be retained between adjacent coils of retaining spring 28 so that the retaining spring 28 grips the loose end of line 30. The loose end of the line 30 from the spool 40 may be retained in the retaining spring 28 for convenience.

Alternatively, the line 30 can be anchored as described above and then cut to the required length. The second (loose) end of the line 30 may be temporarily retained in the retaining spring 28, for example to allow a user to collate all the required components which make up the rig 11. Once the components have been collected, the loose end of the line 30 is then removed from the retaining spring 28, and the components threaded onto line 30.

The second end of rig 11 is thereafter anchored to arm 14b. The second end of rig 11 may be attached to a second tension spring (not shown) coupled to the arm 14a. The second tension spring may be directly attached to base 36 of the spool holder 32. It may also be attached to a portion of arm 14a, or it may be attached directly to line hook 50. It should be noted that the second end of the rig 11 may be directly attached to the line hook 50 without the use of a second tension spring. As before, if a tension spring is not used, the rig 11 will generally require to be tensioned by adjusting the distance between the arms 14a, 14b using the tension screw 18 and telescopic movement of the portions 12a, 12b.

Once both ends of the rig 11 have been anchored using one of the options described above, the rig 11 may then be tensioned by slackening the tension screw 18 and adjusting the positions of the first and second portions 12a, 12b accordingly (ie adjusting the distance between the arms 14a, 14b) to provide tension to the rig 11. Use of tension springs provides a more flexible option in that tension will be provided to the rig 11 by the tension springs themselves, and the distance between the arms 14a, 14b is not so critical. However, if no tension springs are used, the tension is provided to the rig 11 by setting the distance between the two arms 14a, 14b so that any slack in the rig 11 is tightened. Once the rig 11 has been tensioned, the tension screw 18 is tightened to lock the two portions 12a, 12b relative to one another.

Once the fishing line 30 has been fixed and tensioned (if required) as described above, the swivels 58 are moved to the desired position on the fishing line 30, and the first and second crimps 54, 62 are then crimped to ensure that the swivel 58 cannot move laterally along the fishing line 30. Snoods 64 are typically attached to the swivels 28, the snoods 64 typically comprising a further length of fishing line 30 (which may be of the same or a different breaking strength), one end of the line 30 being attached to the swivel 28, and the other end of the line 30 having a fishing hook 66 or the like attached thereto. Additional components may be added to the snoods 64 as required.

Once the rig 11 has been assembled as required, it is then released from the anchor points. For example, the rig 11 may have to be detached from the tension springs and/or hooks 50, 52 if it was attached thereto.
Further rigs can then be made as required.

Thus, there is provided a fishing aid which assists in the manufacture of rigs. The aid, in certain embodiments, allows the user to have both hands free to assemble the rig which makes assembly easier and quicker. Furthermore, the aid, in certain embodiments, allows the line to be tensioned whilst the rig is being assembled.

Modifications and improvements may be made to the foregoing without departing from the scope of the present invention.

## Claims

1. A fishing aid comprising a body (12), at least one spool holder (32) coupled to the body (12), and a retainer (28) coupled to the body (12) to receive a line (11, 30), **characterised in that** the length of the body (12) is adjustable.

2. A fishing aid according to claim 1, wherein the body (12) comprises a first portion (12a) and a second portion (12b), the first and second portions (12a, 12b) being telescopically coupled so that the length of the body (12) may be adjusted.

3. A fishing aid according to claim 1 or claim 2, wherein the body (12) is substantially U-shaped.

4. A fishing aid according to claim 3, wherein the spool holder (32) is located on one of the arms (14a, 14b) of the U-shaped body (12).

5. A fishing aid according to claim 3 or claim 4, wherein a spool holder (32) is positioned on each arm (14a, 14b) of the U-shaped body (12).

6. A fishing aid according to any preceding claim, provided with indicia (16).

7. A fishing aid according to any preceding claim, wherein the spool holder (32) includes a rod (38).

8. A fishing aid according to claim 7, wherein the rod (38) is removably coupled to the body (12).

9. A fishing aid according to any preceding claim, wherein the retainer comprises at least one retaining spring (28).

10. A fishing aid according to claim 9, wherein the retaining spring (28) is positioned perpendicular to the body (12).

11. A fishing aid according to claim 9 or claim 10, wherein the retaining spring (28) is a coil spring, and can receive at least a portion of a fishing line (11, 30) between adjacent coils of the spring (28).

12. A fishing aid according to any one of claims 9 to 11, wherein the retaining spring (28) is supported by a holder (22), the holder (22) being movably attached to the body (12).

13. A fishing aid according to claim 12, wherein the holder (22) is substantially U-shaped, the retaining spring (28) being mounted between the arms (26) of the U-shape.

14. A fishing aid according to claim 12 or claim 13, wherein the holder (22) is attached to the body (12) substantially perpendicularly thereto.

15. A fishing aid according to any one of claims 12 to 14, wherein the holder (22) is provided with resilient stabilisers (31) to enhance the stability of the aid (10).

16. A fishing aid according to any preceding claim, wherein a tension spring is provided to tension the line (11, 30).

17. A fishing aid according to any preceding claim, wherein the fishing aid (10) includes a stopper (44), the stopper (44) being provided on at least one of the arms (14a, 14b) of the body (12).

18. A fishing aid according to claim 17, wherein the stopper (44) is provided with a groove (48) in which a fishing line (11, 30) may be positioned.

19. A fishing aid according to any preceding claim, wherein the fishing aid (10) includes at least one hook (50, 52) positioned on the body (12).

20. A fishing aid according to claim 19, wherein two hooks (50, 52) are provided on the body (12).

21. A fishing aid according to claim 19 or claim 20, wherein one or more hooks (50, 52) is associated with a tensioning spring to tension the line (11, 30).

22. A fishing aid according to any preceding claim, wherein the body (12) is provided with at least one resilient stabiliser (31).

## Patentansprüche

1. Ein Angelhilfsmittel, bestehend aus einem Körper (12), zumindest einer Spulenhaltevorrichtung (32), die mit dem Körper (12) gekoppelt ist, und einem Halter (28), der mit dem Körper (12) gekoppelt ist, um eine Schnur (11, 30) aufzunehmen, **dadurch gekennzeichnet, dass** die Länge des Körpers (12) einstellbar ist.

2. Angelhilfsmittel gemäß Anspruch 1, wobei der Körper (12) aus einem ersten Abschnitt (12a) und einem zweiten Abschnitt (12b) besteht, wobei der erste und der zweite Abschnitt (12a, 12b) ineinanderschiebbar gekoppelt sind, so dass die Länge des Körpers (12) eingestellt werden kann.

3. Angelhilfsmittel gemäß Anspruch 1 oder Anspruch 2, wobei der Körper (12) im Wesentlichen U-förmig ist.

4. Angelhilfsmittel gemäß Anspruch 3, wobei sich die Spulenhaltevorrichtung (32) auf einem der Arme (14a, 14b) des U-förmigen Körpers (12) befindet.

5. Angelhilfsmittel gemäß Anspruch 3 oder Anspruch 4, wobei eine Spulenhaltevorrichtung (32) auf jedem Arm (14a, 14b) des U-förmigen Körpers (12) positioniert ist.

6. Angelhilfsmittel gemäß einem der vorhergehenden Ansprüche, das mit Zeichen (16) versehen ist.

7. Angelhilfsmittel gemäß einem der vorhergehenden Ansprüche, wobei die Spulenhaltevorrichtung (32) eine Stange (38) umfasst.

8. Angelhilfsmittel gemäß Anspruch 7, wobei die Stange (38) entfernbar mit dem Körper (12) gekoppelt ist.

9. Angelhilfsmittel gemäß einem der vorhergehenden Ansprüche, wobei der Halter aus zumindest einer Haltefeder (28) besteht.

10. Angelhilfsmittel gemäß Anspruch 9, wobei die Haltefeder (28) senkrecht zum Körper (12) positioniert ist.

11. Angelhilfsmittel gemäß Anspruch 9 oder Anspruch 10, wobei die Haltefeder (28) eine Schraubenfeder ist und zumindest einen Abschnitt einer Angelschnur (11, 30) zwischen angrenzenden Wicklungen der Feder (28) aufnehmen kann.

12. Angelhilfsmittel gemäß einem der Ansprüche 9 bis 11, wobei die Haltefeder (28) von einer Haltevorrichtung (22) gestützt ist, wobei die Haltevorrichtung (22) bewegbar am Körper (12) befestigt ist.

13. Angelhilfsmittel gemäß Anspruch 12, wobei die Haltevorrichtung (22) im Wesentlichen U-förmig ist, wobei die Haltefeder (28) zwischen den Armen (26) der U-Form montiert ist.

14. Angelhilfsmittel gemäß Anspruch 12 oder Anspruch 13, wobei die Haltevorrichtung (22) am Körper (12) im Wesentlichen senkrecht zu diesem befestigt ist.

15. Angelhilfsmittel gemäß einem der Ansprüche 12 bis 14, wobei die Haltevorrichtung (22) mit federnden Stabilisatoren (31) versehen ist, um die Stabilität des Hilfsmittels (10) zu verbessern.

16. Angelhilfsmittel gemäß einem der vorhergehenden Ansprüche, wobei eine Spannfeder bereitgestellt ist, um die Schnur (11, 30) zu spannen.

17. Angelhilfsmittel gemäß einem der vorhergehenden Ansprüche, wobei das Angelhilfsmittel (10) einen Anschlag (44) umfasst, wobei der Anschlag (44) auf zumindest einem der Arme (14a, 14b) des Körpers (12) bereitgestellt ist.

18. Angelhilfsmittel gemäß Anspruch 17, wobei der Anschlag (44) mit einer Rille (48), in der eine Angelschnur (11, 30) positioniert werden kann, versehen ist.

19. Angelhilfsmittel gemäß einem der vorhergehenden Ansprüche, wobei das Angelhilfsmittel (10) zumindest einen Haken (50, 52), der auf dem Körper (12) positioniert ist, umfasst.

20. Angelhilfsmittel gemäß Anspruch 19, wobei zwei Haken (50, 52) auf dem Körper (12) bereitgestellt sind.

21. Angelhilfsmittel gemäß Anspruch 19 oder Anspruch 20, wobei ein oder mehrere Haken (50, 52) einer Spannfeder zugehörig ist, um die Schnur (11, 30) zu spannen.

22. Angelhilfsmittel gemäß einem der vorhergehenden Ansprüche, wobei der Körper (12) mit zumindest einem federnden Stabilisator (31) versehen ist.

## Revendications

1. Un accessoire de pêche comprenant un corps (12), au moins un porte-bobine (32) couplé au corps (12), et une pièce de retenue (28) couplée au corps (12) pour recevoir une ligne (11, 30), **caractérisé en ce que** la longueur du corps (12) est réglable.

2. Un accessoire de pêche selon la revendication 1, dans lequel le corps (12) comprend une première portion (12a) et une deuxième portion (12b), les première et deuxième portions (12a, 12b) étant couplées de façon télescopique de sorte que la longueur du corps (12) puisse être réglée.

3. Un accessoire de pêcha selon la revendication 1 ou la revendication 2, dans lequel le corps (12) est substantiellement configuré en U.

4. Un accessoire de pêche selon la revendication 3, dans lequel le porte-bobine (32) est situé sur un des bras (14a, 14b) du corps configuré en U (12).

5. Un accessoire de pêche selon la revendication 3 ou la revendication 4, dans lequel un porte-bobine (32) est positionné sur chaque bras (14a, 14b) du corps configuré en U (12).

6. Un accessoire de pêche selon n'importe quelle revendication précédente, muni de repères (16).

7. Un accessoire de pêche selon n'importe quelle revendication précédente, dans lequel le porte-bobine (32) comporte une tige (38).

8. Un accessoire de pêche selon la revendication 7, dans lequel la tige (38) est couplée au corps (12) de façon à pouvoir être ôtée.

9. Un accessoire de pêche selon n'importe quelle revendication précédente, dans lequel la pièce de retenue comprend au moins un ressort de retenue (28).

10. Un accessoire de pêche selon la revendication 9, dans lequel le ressort de retenue (28) est positionné de façon perpendiculaire au corps (12).

11. Un accessoire de pêche selon la revendication 9 ou la revendication 10, dans lequel le ressort de retenue (28) est un ressort à enroulement et peut recevoir au moins une portion d'une ligne de pêche (11, 30) entre des enroulements adjacents du ressort (28).

12. Un accessoire de pêche selon n'importe laquelle des revendications 9 à 11, dans lequel le ressort de retenue (28) est soutenu par une pièce de support (22), la pièce de support (22) étant attachée au corps (12) de façon amovible.

13. Un accessoire de pêche selon la revendication 12, dans lequel la pièce de support (22) est substantiellement configurée en U, le ressort de retenue (28) étant monté entre les bras (26) de la configuration en U.

14. Un accessoire de pêche selon la revendication 12 ou la revendication 13, dans lequel la pièce de support (22) est attachée au corps (12) substantiellement perpendiculairement à celui-ci.

15. Un accessoire de pêche selon n'importe laquelle des revendications 12 à 14, dans lequel la pièce de support (22) est munie de stabilisateurs résilients (31) pour renforcer la stabilité de l'accessoire (10).

16. Un accessoire de pêche selon n'importe quelle revendication précédente, dans lequel un ressort de tension est prévu pour tendre la ligne (11, 30).

17. Un accessoire de pêche selon n'importe quelle revendication précédente, dans lequel l'accessoire de pêche (10) comporte un butoir (44), le butoir (44) étant prévu sur au moins un des bras (14a, 14b) du corps (12).

18. Un accessoire de pêche selon la revendication 17, dans lequel le butoir (44) est muni d'une rainure (48) dans laquelle une ligne de pêche (11, 30) peut être positionnée.

19. Un accessoire de pêche selon n'importe quelle revendication précédente, dans lequel l'accessoire de pêche (10) comporte au moins un crochet (50, 52) positionné sur le corps (12).

20. Un accessoire de pêche selon la revendication 19, dans lequel deux crochets (50, 52) sont prévus sur le corps (12).

21. Un accessoire de pêche selon la revendication 19 ou la revendication 20, dans lequel un crochet ou plus (50, 52) est associé avec un ressort tendeur pour tendre la ligne (11, 30).

22. Un accessoire de pêche selon n'importe quelle revendication précédente, dans lequel le corps (12) est muni d'au moins un stabilisateur résilient (31).
